# FASCICULE DE BREVET EUROPEEN

(11) **EP 0 591 912 B1**
(45) Date de publication et mention de la délivrance du brevet: **20.08.1997**
(21) Numéro de dépôt: 93116052.7
(22) Date de dépôt: 05.10.1993
(51) Int. Cl.: G01J 9/02, G01B 9/02

(54) **Interféromètre, comprenant un ensemble intégré et un miroir séparés l'un de l'autre par une région de mesure**
Interferometer, bestehend aus einer integrierten Anordnung und einem Spiegel, die durch eine Messzone voneinander getrennt sind
Interferometer, comprising an intergrated arrangement and a mirror, which are seperated from each other by a measurement zone

(30) Priorité: 06.10.1992 FR 9212122
(43) Date de publication de la demande: 13.04.1994
(73) Titulaire: CSEM, Centre Suisse d'Electronique et de Microtechnique S.A., CH-2007 Neuchâtel (CH)
(72) Inventeur: Voirin, Guy, CH-2000 Neuchâtel (CH)
(74) Mandataire: de Montmollin, Henri

(56) Documents cités:
- WO-A-90/11484
- DE-A- 3 837 593
- US-A- 4 941 744

## Description

La présente invention concerne un interféromètre comportant un ensemble intégré et un miroir séparé de cet ensemble intégré par au moins une région de mesure, ce miroir servant à réfléchir un faisceau de mesure. Cet interféromètre est destiné notamment à la mesure de distance, ainsi qu'à la mesure de l'évolution de l'indice de réfraction d'un milieu remplissant la région de mesure. Il peut aussi trouver une application dans la stabilisation de la longueur d'onde, dans ledit milieu, d'un faisceau de lumière provenant par exemple d'une diode laser.

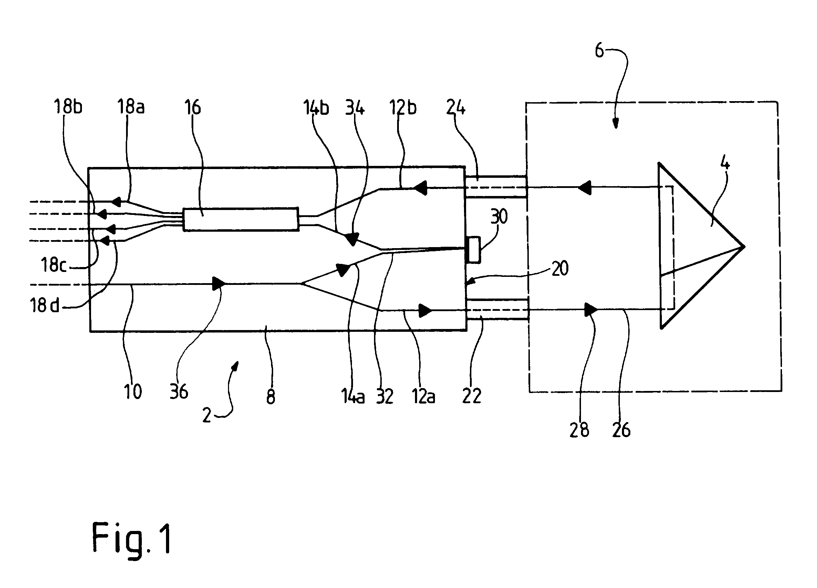

Un interféromètre, développé récemment dans les laboratoires de la Déposante et représenté à la figure 1, peut être utilisé pour exposer le but de l'invention.

Sur cette figure 1, on observe un interféromètre comprenant un ensemble intégré 2 et un miroir de mesure 4 séparé de l'ensemble intégré 2 par une région de mesure 6. On comprend par ensemble intégré un ensemble intégrant divers éléments optiques reliés les uns aux autres de manière fonctionnelle et supportés par une même unité.

L'interféromètre représenté sur la figure 1 est du type Mach-Zehnder. L'ensemble intégré 2 est formé par un substrat 8 à la surface duquel sont prévus un guide optique d'entrée 10, un guide optique de mesure comprenant une première branche 12a et une deuxième branche 12b, ainsi qu'un guide optique de référence comprenant une première branche 14a et une deuxième branche 14b. L'ensemble intégré 2 comprend encore un démodulateur de phase 16 à l'entrée duquel aboutissent la branche 12b du guide de mesure et la branche 14b du guide de référence. A la sortie du démodulateur 16, on obtient quatre signaux lumineux distincts susceptibles d'être détectés chacun séparément dans quatre guides de sortie 18a à 18d.

On notera que la longueur du guide optique de mesure est sensiblement identique à la longueur du guide optique de référence. Sur un des côtés latéraux 20 du substrat 8 sont prévues des lentilles de transition 22 et 24 entre ledit ensemble intégré 2 et ladite région de mesure 6, ces lentilles de transition 22 et 24 étant situées sur le trajet optique de mesure 26 dans lequel est susceptible de se propager un faisceau de mesure 28.

La première lentille 22 sert à collimater le faisceau de mesure 28 susceptible de se propager dans la branche 12a du guide de mesure. La deuxième lentille 24 sert à focaliser le faisceau de mesure 28 dans la branche 12b du guide de mesure, après que ce faisceau de mesure ait été réfléchi par le miroir de mesure 4. Ce miroir de mesure 4 est positionné de telle manière qu'il réfléchisse le faisceau de mesure vers la lentille 24, selon une direction qui coïncide avec l'axe optique de cette dernière.

On remarquera que le miroir de mesure 4 est formé ici par un rétroréflecteur creux et que les lentilles de transition 22 et 24 sont formées par des lentilles GRIN autofocalisatrices présentant un gradient d'indice.

Les deux branches 14a et 14b du guide optique de référence se rejoignent dans le plan défini par la face latérale 20 du substrat 8. A cet endroit, un miroir de référence 30 est prévu. On notera que les branches 14a et 14b du guide optique de référence forment conjointement avec le miroir de référence 30 un trajet optique de référence 32 pour un faisceau de référence 34, ce dernier provenant d'un faisceau d'entrée 36 servant aussi à former le faisceau de mesure 28.

Un dispositif similaire, mais avec les première et deuxième lentilles séparées physiquement du substrat dans lequel sont agencés le guide optique de mesure et le guide optique de référence, est divulgué dans le document WO 90/11484.

Le dispositif décrit ci-avant présente un désavantage pour ce qui concerne la précision de mesures pouvant être effectuées dans la région de mesure 6. En effet, toute mesure effectuée par un tel interféromètre résulte de la différence de chemin optique entre le chemin optique de mesure défini par le trajet optique de mesure 26 et le chemin optique de référence défini par le trajet optique de référence 32.

Ainsi, toute variation, en dehors de la région de mesure 6, de la différence de chemin optique entre le chemin optique de mesure et le chemin optique de référence engendre des imprécisions sur une mesure effectuée dans cette région. Dans le cas du dispositif décrit ci-avant, une telle variation peut se présenter suite à divers phénomènes, par exemple un changement de la température du substrat 8 de l'ensemble intégré 2, étant donné que le chemin optique de mesure dans l'ensemble intégré 2 est différent du chemin optique de référence dans cet ensemble intégré à cause de la présence des lentilles de transition 22 et 24.

Le but de la présente invention est de pallier l'inconvénient décrit ci-dessus.

La présente invention a donc pour objet un interféromètre comprenant en combinaison un ensemble intégré et un miroir de mesure aligné selon une première direction prédéterminée relativement audit ensemble intégré, une région de mesure étant située au moins partiellement entre ledit ensemble intégré et ledit miroir de mesure, ledit ensemble intégré comprenant un guide de référence, définissant partiellement un trajet optique de référence, et un guide de mesure définissant partiellement un trajet optique de mesure conjointement avec ledit miroir de mesure, lesdits trajets optiques de mesure et de référence définissant respectivement un chemin optique de mesure et un chemin optique de référence, un faisceau lumineux de référence et un faisceau lumineux de mesure étant respectivement susceptibles de se propager dans ledit guide de référence et ledit guide de mesure, ledit ensemble intégré comprenant un démodulateur de phase, à l'entrée duquel aboutissent ledit guide de mesure et ledit guide de référence. Cet interféromètre comprend en outre des première et deuxième lentilles situées sur ledit trajet optique de mesure, ladite première lentille servant à collimater le faisceau de mesure sortant dudit ensemble intégré et ladite deuxième lentille servant à focaliser ce faisceau de mesure entrant dans ledit ensemble intégré après avoir été réfléchi par ledit miroir de mesure. Cet interféromètre est caractérisé en ce qu'il comprend des moyens d'égalisation du chemin optique de référence et du chemin optique de mesure définis respectivement par le trajet optique de référence et le trajet optique de mesure dans l'ensemble intégré et dans les première et deuxième lentilles.

Il résulte de cette caractéristique que la différence de chemin optique entre le trajet optique de mesure et le trajet optique de référence est défini uniquement par le chemin optique du faisceau lumineux de mesure dans la région externe à l'ensemble intégré et aux première et deuxième lentilles. Il est ainsi possible d'avoir un résultat d'interférence dépendant uniquement de la différence de chemin optique dans la région de mesure.

Selon un mode de réalisation principal de l'invention, il est prévu que lesdits moyens d'égalisation définissent une surface externe dudit ensemble intégré contre lequel est disposé un miroir de référence servant à former, conjointement avec lesdits moyens d'égalisation et ledit guide de référence, ledit trajet optique de référence, lesdits moyens d'égalisation définissant pour ledit faisceau de référence un chemin optique sensiblement identique au chemin optique défini par les première et deuxième lentilles pour le faisceau de mesure, le guide de référence et le guide de mesure ayant chacun des propriétés physiques et une longueur sensiblement identiques.

Il résulte des caractéristiques de ce mode de réalisation principal que la différence de chemin optique, dans l'ensemble intégré avec les première et deuxième lentilles, entre le trajet optique de mesure et le trajet optique de référence conserve une valeur nulle quelle que soit par exemple la température de l'ensemble intégré. Ainsi, une grande fiabilité peut être obtenue pour n'importe quelle mesure effectuée dans la région de mesure.

D'autres caractéristiques et avantages de l'invention ressortiront encore mieux à la lecture de la description suivante, faite en référence aux dessins annexés donnés à titre d'exemples non-limitatifs, et dans lesquels :
- La figure 1, déjà décrite, représente un interféromètre développé antérieurement par la Déposante;
- La figure 2 représente schématiquement un mode de réalisation d'un interféromètre selon l'invention;
- La figure 3 représente schématiquement la configuration d'un démodulateur de phase tel que prévu à titre d'exemple dans le mode de réalisation de l'invention de la figure 2;
- La figure 4 est un diagramme explicatif du fonctionnement du démodulateur de phase de la figure 3;
- La figure 5 représente un dispositif comprenant en association deux interféromètres selon l'invention, le premier de ces interféromètres servant à la mesure de distances, alors que le deuxième interféromètre sert à stabiliser la longueur d'onde d'un faisceau de lumière utilisé pour la mesure de distances.

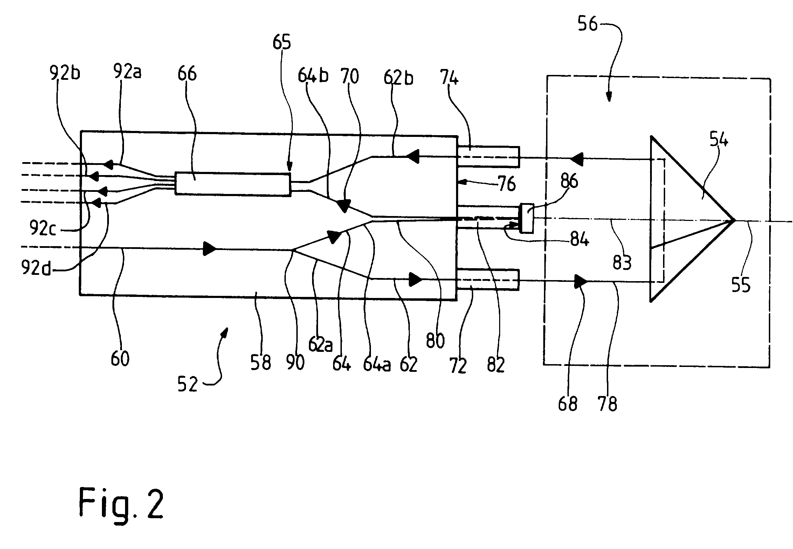

En se référant ci-après à la figure 2, on décrira un mode de réalisation d'un interféromètre selon l'invention, cet interféromètre étant du type Mach-Zehnder.

Sur cette figure 2, l'interféromètre comprend un ensemble intégré 52 et un miroir de mesure 54, une région de mesure 56 étant située au moins partiellement entre le miroir de mesure 54 et l'ensemble intégré 52. A titre d'exemple, le miroir de mesure 54 est formé par un rétroréflecteur creux.

L'ensemble intégré 52 est formé par un substrat 58 à la surface duquel est prévu un guide optique d'entrée 60, un guide optique de mesure 62 comprenant des première et deuxième branches 62a et 62b, ainsi qu'un guide optique de référence 64 comprenant des première et deuxième branches 64a et 64b. Les guides de mesure et de référence 62 et 64 aboutissent à l'entrée 65 d'un démodulateur de phase 66 dans lequel se produit une interférence entre un faisceau lumineux de mesure 68 et un faisceau lumineux de référence 70 susceptibles de se propager respectivement dans la branche 62b du guide de mesure 62 et dans la branche 64b du guide de référence 64.

Des moyens de transition formés par une première lentille de transition 72 et une deuxième lentille de transition 74 sont prévus sur la face latérale 76 du substrat 58. Ces deux lentilles de transition 72 et 74 sont situées sur le trajet optique de mesure 78, lequel est défini par ledit guide de mesure 62, les lentilles 72 et 74 et le miroir de mesure 54. On notera que ce dernier est aligné selon une direction prédéterminée 55 relativement à l'ensemble intégré 52, cette direction étant parallèle à la direction de l'axe optique de la lentilles 72, et est orienté de manière qu'un faisceau incident sortant de la lentille 72, dans la direction de son axe optique, soit réfléchi selon l'axe optique de la lentille 74.

Des moyens d'égalisation, dans ledit ensemble intégré 52, du chemin optique de mesure, défini par le trajet optique de mesure 78 dans cet ensemble intégré, et du chemin optique de référence, défini par le trajet optique de référence 80 dans cet ensemble intégré, sont formés par une lentille d'égalisation 82 définissant un axe optique 83 et une surface externe 84 contre laquelle est disposée un miroir de référence 86. Le trajet optique de référence 80 est ainsi défini par le guide optique de référence 64, la lentille d'égalisation 82 et le miroir de référence 86. De manière générale, il est seulement nécessaire que le miroir de référence 86 soit aligné selon la direction de l'axe optique 83 et placé à une distance fixe de la surface externe 84, et qu'il soit orienté de manière à réfléchir selon une direction parallèle un faisceau incident se propageant selon une direction parallèle à l'axe optique 83 de la lentille 82.

Afin de connecter optiquement la branche 64a avec la branche 64b du guide de référence 64, il est prévu que l'extrémité de chacune de ces deux branches, situées à proximité de la face 76 du substrat 58, soient légèrement décalées angulairement par rapport à l'axe optique 83, de telle manière qu'un faisceau issu de la branche 64a soit, après réflexion par le miroir de référence 86, réintroduit dans la branche 64b. On notera ici que les lentilles décrites ci-avant peuvent dans un autre mode de réalisation (non-représenté) être formées directement sur le substrat 58 dans un prolongement continu des guides de mesure et de référence. Dans ce dernier cas, le terme lentille est un terme général pour un moyen de transition permettant à un faisceau lumineux de passer d'un guide optique à un milieu dans lequel il se propage de manière non-guidée et réciproquement. Ce moyen de transition peut aussi, dans un autre mode de réalisation (non-représenté), être formé par un réseau diffractant avec une fonction de collimation.

La configuration des guides optiques de mesure et de référence 62 et 64 a été prévue de telle manière que la longueur de l'un soit sensiblement identique à la longueur de l'autre. Etant donné que les lentilles 72, 74 et 82 sont sensiblement identiques, le chemin optique de référence dans l'ensemble intégré 52 et le chemin optique de mesure dans ce même ensemble intégré sont sensiblement identiques, les propriétés physiques des guides de mesure et de référence étant identiques.

En effet, depuis le point de séparation 90, à partir duquel sont définis les guides de mesure et de référence 62 et 64, les branches 62a et 62b du guide de mesure 62 ont respectivement une configuration sensiblement symétrique aux branches 64a et 64b du guide optique de référence 64. Ensuite, le faisceau de mesure 68 traverse une fois la lentille 72 lorsque ce faisceau sort de l'ensemble intégré 58 et une fois la lentille 74 lorsque ce faisceau de mesure 68 entre à nouveau dans l'ensemble intégré 52 après avoir été réfléchi par le miroir de mesure 54, alors que le faisceau de référence 70 traverse dans les deux sens la lentille 82 servant de moyens d'égalisation des chemins optiques dans l'ensemble intégré 52.

L'interféromètre selon l'invention décrit ici présente l'avantage d'être insensible aux variations de température de l'ensemble intégré 52 et à des phénomènes tels qu'une dilatation ou un changement de l'état de surface du substrat 58. De plus, le fait d'avoir pris une lentille 82, sensiblement identique aux lentilles 72 et 74, comme moyens d'égalisation des chemins optiques dans l'ensemble intégré 52 n'engendre pas de difficultés techniques supplémentaires à la réalisation de l'interféromètre selon l'invention. On notera qu'il est possible de prévoir dans une variante (non-représentée) de ce mode de réalisation selon l'invention une matrice de lentilles intégrant les lentilles 72 et 74 et la lentille 82. Une telle matrice permet d'usiner l'ensemble des lentilles nécessaires avec une grande précision, en particulier pour ce qui concerne la distance séparant chaque lentille des deux autres. Toutes les méthodes de réalisation de matrice de lentilles connues de l'homme du métier pour de tels dispositifs sont envisageables.

On notera encore que sur la figure 2 quatre guides de sortie 92a, 92b, 92c et 92d sont prévus à la sortie du démodulateur 66, des signaux de sortie étant susceptibles de se propager dans ces guides de sortie 92a à 92d pour transmettre le résultat de l'interférence entre les faisceaux lumineux de mesure 68 et de référence 70 à une unité de détection non-représentée sur cette figure 2.

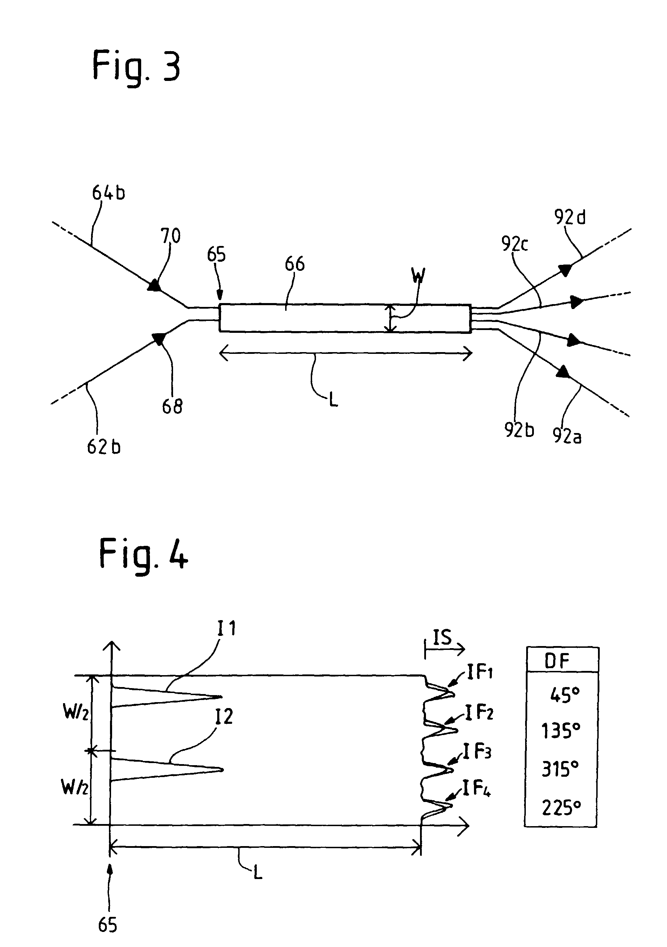

En se référant ci-après aux figures 3 et 4, on décrira plus précisément le démodulateur de phase 66 de la figure 2.

Le mode de réalisation du démodulateur 66 décrit dans les figures 3 et 4 est nullement limitatif. On trouvera d'autres exemples dans l'article "Integriert optisches Michelson-Interferometer mit Quadraturdemodulation im Glass zur Messung von Verschiebewegen" paru dans la revue : Technisches Messen 58 (1991) 4, page 152 à 157, R. Oldenbourg Verlag. On trouvera aussi dans cet article des techniques de production de l'ensemble intégré décrit ci-avant, ainsi qu'un interféromètre de Michelson intégré de l'art antérieur.

Sur la figure 3, le démodulateur de phase 66 est formé par un guide d'ondes plan, de forme sensiblement rectangulaire, ayant une largueur W et une longueur L. Ce guide d'ondes plan est un guide multimode ayant la propriété de former des images multiples à partir d'une distribution lumineuse incidente.

Dans le mode de réalisation décrit aux figures 3 et 4, le faisceau de lumière 70 se propageant dans la branche 64b du guide de référence 64 présente à l'entrée 65 du démodulateur 66 une distribution en intensité lumineuse I1, alors que le faisceau lumineux 68 se propageant dans la branche 62b du guide de mesure 62 présente à l'entrée 65 de ce démodulateur 66 une distribution lumineuse I2. Lesdits faisceaux se propageant dans les guides de mesure et de référence 62 et 64 sont injectés à l'entrée 65 du démodulateur 66 à des endroits bien spécifiques de telle manière que chacune des distributions en intensité lumineuse I1 et I2 forme à une distance L quatre images d'intensité IS moindres.

La distance L est définie par la largueur de bande W du guide multimode que constitue le démodulateur 66, par l'indice de réfraction N du milieu formant ce guide d'ondes plan et finalement par la longueur d'onde λο des faisceaux lumineux 68 et 70. La relation mathématique reliant la longueur L à ces divers paramètres est donnée par : L = NW²/λο . A la distance L, les deux faisceaux incidents I1 et I2 forment chacun quatre images se superposant aux quatre images de l'autre pour former quatre interférences spécifiques IF1, IF2, IF3 et IF4 dont l'intensité est une fonction du déphasage ϕ entre les deux faisceaux indicents.

Sur la figure 4 est encore donnée la différence de phases DF engendrée lors de la propagation, dans le démodulateur 66, des deux distributions lumineuses incidentes I1 et I2. On remarquera que cette différence de phases DF engendrée par le démodulateur 66 est un multiple de 90°.Si on effectue un changement des axes de référence conventionnels du cercle trigonométrique par une rotation de 45°, l'interférence IF1 fournit une intensité lumineuse variant selon(1 + cos ϕ) ,ϕ étant le déphasage entre les deux faisceaux incidents, alors que les interférences IF2, IF3 et IF4 fournissant une intensité lumineuse variant respectivement selon (1 - sin (ϕ ), (1 + sin ϕ) et (1 - cos ϕ).

On notera que la mesure de l'intensité de l'interférence IF1 et de l'interférence IF2 est suffisante pour suivre un défilement de franges d'interférence et pour en déterminer le sens. Cependant, le fait de travailler avec les quatre superpositions d'images permet d'augmenter le contraste du résultat de l'interférence et d'obtenir un résultat traité avec une valeur moyenne égale à zéro.

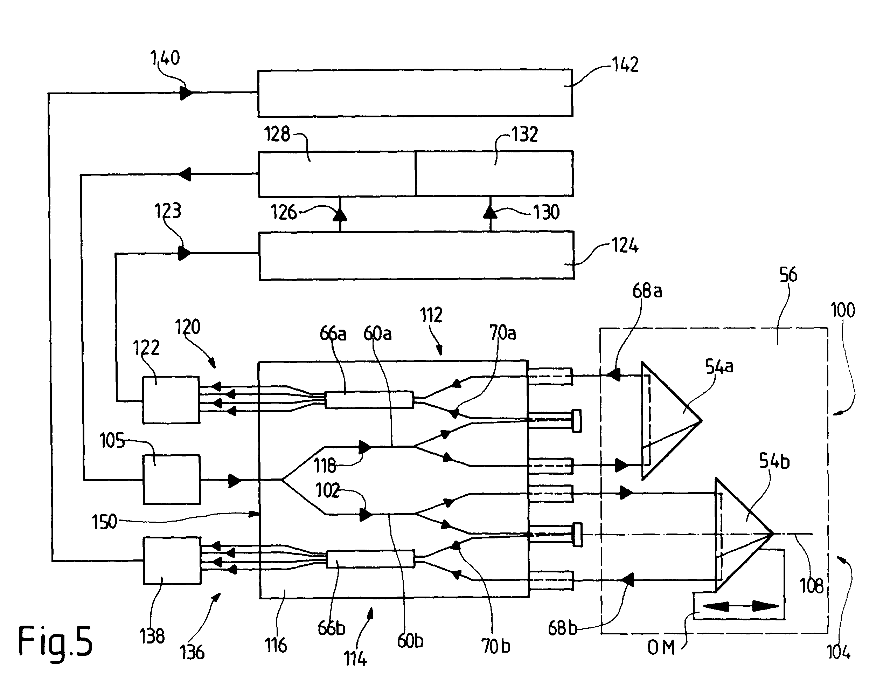

En se référant ci-après à la figure 5, on décrira un dispositif comprenant deux interféromètres selon l'invention, ce dispositif étant utilisé pour mesurer de manière très précise la position d'un objet mobile OM.

Le dispositif représenté sur cette figure 5 sert à la mesure de distances très précises dans une région de mesure 56. Pour ce faire, le dispositif comprend un premier interféromètre 100 selon l'invention, servant à stabiliser la longueur d'onde d'un faisceau de travail 102 dans un milieu ayant un indice de réfraction variable et remplissant la région de mesure 56, et un deuxième interféromètre 104 selon l'invention servant à mesurer la position de l'objet OM relativement à l'ensemble intégré 114 de cet interféromètre, cet objet OM étant solidaire du miroir de mesure 54b de l'interféromètre 104 et susceptible d'être déplacé selon un axe de déplacement 108 correspondant à la direction d'alignement du miroir de mesure 54b.

Par contre, le miroir de mesure 54a de l'interféromètre 100 est positionné de manière fixe relativement à l'ensemble intégré 112 de cet interféromètre. Dans le mode de réalisation décrit ici, l'ensemble intégré 112 de l'interféromètre 100 et l'ensemble intégré 114 de l'interféromètre 104 forment un seul ensemble intégré. De plus, les deux ensembles intégrés 112 et 114 sont supportés par un seul et même substrat 116.

Le faisceau de travail 102 se propage initialement dans le guide d'entrée 60b de l'interféromètre 104, alors qu'un faisceau de contrôle 118 se propage initialement dans le guide d'entrée 60a de l'interféromètre 100. Le faisceau de travail 102 et le faisceau de contrôle 118 sont issus tous deux de la même source lumineuse 105.

Les interféromètres 100 et 104 correspondent chacun au mode de réalisation d'un interféromètre selon l'invention représenté à la figure 2, hormis le fait que le substrat 116 supporte les deux ensembles intégrés 112 et 114.Pour des raisons de clarté, les références données à la figure 2 ne seront pas toutes à nouveau données sur cette figure 5.

L'ensemble de signaux de sortie 120 sortant du démodulateur de phase 66a du premier interféromètre 100 sont transmis à un premier système de détection 122. Ce système de détection 122 transmet alors au moins un signal électrique 123, représentatif du résultat de l'interférence dans le démodulateur 66a, entre le faisceau de mesure 68a et le faisceau de référence 70a du premier interféromètre 100, à une unité 124 de stabilisation de la longueur d'onde, dans la région de mesure 56, du faisceau lumineux de travail 102 émis par la source laser 105. On notera que dans le dispositif décrit ici, la source laser 105 est constituée par une diode laser.

L'unité de stabilisation 124 est agencée de telle manière qu'elle transmet un premier signal de réglage 126 à une unité 128 d'alimentation électrique de la source laser 105 et un deuxième signal 130 à une unité 132 de régulation de la température de la source laser 105, le premier signal 126 servant à régler la valeur en alimentation électrique de la source laser 105 et le deuxième signal 130 servant à régler la température de cette source laser 105 de telle manière que la valeur de la longueur d'onde résultante pour le faisceau lumineux de travail 102 dans la région de mesure 56 reste constante dans le temps.

L'ensemble des signaux optiques de sortie 136 provenant du démodulateur de phase 66b appartenant à l'interféromètre 104 est transmis à un deuxième système de détection 138. Ce système de détection transmet alors au moins un signal électrique 140 représentatif du résultat de l'interférence dans le démodulateur 66b à une unité 142 de mesure du déplacement du miroir mobile 54b. Cette unité 142 de mesure du déplacement du miroir mobile est agencée de telle manière qu'elle est capable de suivre l'évolution de la différence de phases entre le faisceau de mesure 68b et le faisceau de référence 70b se propageant dans l'interféromètre 104 servant à la mesure de distances. L'évolution de la différence de phases entre les faisceaux lumineux 68b et 70b est ensuite convertie en une valeur métrique à l'aide de la valeur de la longueur d'onde du faisceau de travail 102 stabilisée par l'interféromètre 100.

On remarquera que les systèmes de détection 122 et 138, ainsi que la diode laser 105 peuvent être directement placés contre la face latérale 150 du substrat 116.

Finalement, on notera que l'ensemble des lentilles comprises dans le dispositif de la figure 5 peuvent être réalisées sous forme de matrice de lentilles.

## Revendications

1. Interféromètre comprenant en combinaison un ensemble intégré (52) et un miroir de mesure (54) aligné selon une première direction prédéterminée (55) relativement audit ensemble intégré, une région de mesure (56) étant située au moins partiellement entre ledit ensemble intégré et ledit miroir de mesure, ledit ensemble intégré comprenant un guide de référence (64), définissant partiellement un trajet optique de référence (80), et un guide de mesure (62) définissant partiellement un trajet optique de mesure (78) conjointement avec ledit miroir de mesure, un faisceau lumineux de référence (70) et un faisceau lumineux de mesure (68) étant respectivement susceptibles de se propager dans ledit guide de référence et ledit guide de mesure, ledit ensemble intégré comprenant un démodulateur de phase (66), à l'entrée (65) duquel aboutissent ledit guide de mesure et ledit guide de référence, ledit interféromètre comprenant des première et deuxième lentilles (72,74) situées sur ledit trajet optique de mesure, ladite première lentille servant à collimater le faisceau de mesure (68) sortant dudit ensemble intégré (52) et ladite deuxième lentille servant à focaliser ce faisceau de mesure entrant dans ledit ensemble intégré après avoir été réfléchi par ledit miroir de mesure (54), ledit interféromètre étant caractérisé en ce qu'il comprend des moyens d'égalisation (82) du chemin optique de référence et du chemin optique de mesure définis respectivement par le trajet optique de référence et le trajet optique de mesure dans ledit ensemble intégré et dans lesdites première et deuxième lentilles.

2. Interféromètre selon la revendication 1, caractérisé en ce que lesdits moyens d'égalisation sont formés par une troisième lentille (82) à l'extrémité de laquelle est agencé un miroir de référence (86).

3. Interféromètre selon la revendication 2, caractérisé en ce que lesdites première, deuxième et troisième lentilles (72, 74, 82) sont identiques.

4. Interféromètre selon l'une quelconque des revendications précédentes, servant à stabiliser une longueur d'onde d'un faisceau lumineux de travail (102) dans un milieu remplissant ladite région de mesure (56), ce faisceau de travail (102) étant émis par une source lumineuse (105) associée audit interféromètre, ce dernier étant caractérisé en ce qu'il est associé également à des moyens de stabilisation (122, 124, 128, 132) qui, en fonction d'une variation de l'indice de réfraction dudit milieu remplissant ladite région de mesure (56), ajustent la fréquence d'émission de ladite source lumineuse (105).

5. Interféromètre selon la revendication 4, caractérisé en ce que ladite source lumineuse (105) est une diode laser et en ce que lesdits moyens de stabilisation (122, 124, 128, 132) comprennent des moyens (124) pour régler le courant d'alimentation et la température de la diode laser (105) de manière à maintenir la valeur de ladite longueur d'onde constante dans le temps.

6. Interféromètre selon l'une quelconque des revendications 1 à 3, servant à mesurer la position d'un objet (OM) mobile relativement audit ensemble intégré (114) et selon ladite première direction prédéterminée (108), cet interféromètre étant caractérisé en ce que ledit objet est solidaire dudit miroir de mesure (54b) et en ce qu'il comprend également des moyens (138, 142) pour interpréter le résultat de l'interférence effectuée dans ledit démodulateur de phase (66b), de manière à fournir une valeur métrique correspondant à ce résultat et représentant la position dudit objet.

7. Dispositif de mesure comprenant en combinaison un premier interféromètre (100) selon la revendication 4 ou 5 et un second interféromètre (104) selon la revendication 6, ce dispositif étant caractérisé en ce que lesdits premier et second interféromètres sont tous deux alimentés optiquement par ladite source lumineuse (105), ledit faisceau lumineux de travail (102) étant fourni audit second interféromètre (104) pour former ledit faisceau de mesure (68b) et ledit faisceau de référence (70b) de ce second interféromètre servant à la mesure de la position dudit objet (OM).

## Patentansprüche

1. Interferometer, umfaßend in Kombination eine integrierte Baugruppe (52) und einen Meßspiegel (54), der gemäß einer ersten vorbestimmten Richtung (55) relativ zu der integrierten Baugruppe ausgefluchtet ist, wobei eine Meßregion (56) sich mindestens teilweise zwischen der integrierten Baugruppe und dem Meßspiegel befindet, welche integrierte Baugruppe einen Referenzleiter (64) umfaßt, der teilweise eine optische Referenzbahn (80) definiert und einen Meßleiter (62) umfaßt, der teilweise eine optische Meßbahn (78) zusammen mit dem Meßspiegel definiert, wobei ein Referenzlichtstrahl (70) und ein Meßlichtstrahl (68) sich in dem Referenzleiter bzw. dem Meßleiter ausbreiten können, welche integrierte Baugruppe einen Phasendemodulator (66) umfaßt, an dessen Eingang (65) der Meßleiter und der Referenzleiter anstoßen, welches Interferometer erste und zweite Linsen (72, 74) umfaßt, die sich in der optischen Meßbahn befinden, wobei die erste Linse zum Kollimieren des Meßstrahls (68) dient, der aus der integrierten Baugruppe (52) austritt und die zweite Linse der Fokalisation dieses Meßstrahls dient, der in die integrierte Baugruppe eintritt, nachdem er von dem Meßspiegel (54) reflektiert worden ist, welches Interferometer dadurch gekennzeichnet ist, daß es Egalisationsmittel (82) des optischen Referenzweges und des optischen Meßweges aufweist, die von der optischen Referenzbahn bzw. der optischen Meßbahn in der integrierten Baugruppe und in den ersten und zweiten Linsen definiert werden.

2. Interferometer nach Anspruch 1, dadurch gekennzeichnet, daß die Egalisationsmittel von einer dritten Linse (82) gebildet sind, an deren Ende ein Referenzspiegel (86) ausgebildet ist.

3. Interferometer nach Anspruch 2, dadurch gekennzeichnet, daß die erste, zweite und dritte Linse (72, 74, 82) identisch sind.

4. Interferometer nach einem der vorangehenden Ansprüche, das dazu dient, eine Wellenlänge eines Arbeitslichtstrahls (102) in einem Milieu zu stabilisieren, welches die Meßregion (56) füllt, welcher Arbeitsstrahl (102) von einer Lichtquelle (105), die dem Interferometer zugeordnet ist, ausgesandt wird, welches letztere dadurch gekennzeichnet ist, daß ihm gleichermaßen Stabilisationsmittel (122, 124, 128, 132) zugeordnet sind, die, in Abhängigkeit von einer Veränderung des Brechungsindex des die Meßregion (56) füllenden Milieus, die Sendefrequenz der Lichtquelle (105) justiert.

5. Interferometer nach Anspruch 4, dadurch gekennzeichnet, daß die Lichtquelle (105) eine Laserdiode ist und daß die Stabilisationsmittel (122, 124, 128, 132) Mittel (124) für das Regeln des Speisestroms und der Temperaturlaserdiode (105) derart umfaßt, daß die Größe der Wellenlänge über der Zeit konstant gehalten wird.

6. Interferometer nach einem der Ansprüche 1 bis 3, das zur Messung der Position eines Gegenstand (0M) dient, der relativ zu der integrierten Baugruppe (114) und längs der genannten ersten vorbestimmten Richtung (108) beweglich ist, welches Interferometer dadurch gekennzeichnet ist, daß der Gegenstand mit dem Meßspiegel (54b) verbunden ist und daß es gleichermaßen Mittel (138, 142) für das Interpretieren des Resultats der Interferenz umfaßt, bewirkt in dem Phasendemodulator (66b) derart, daß ein metrischer Wert geliefert wird, der diesem Resultat entspricht und die Position des Gegenstandes repräsentiert.

7. Meßvorrichtung, umfaßend in Kombination ein erstes Interferometer (100) nach Anspruch 4 oder 5 und ein zweites Interferometer (104) nach Anspruch 6, welche Vorrichtung dadurch gekennzeichnet ist, daß das erste und das zweite Interferometer beide optisch auf die genannte Lichtquelle (105) ausgerichtet sind, wobei der Arbeitslichtstrahl (102) dem zweiten Interferometer (104) zugeführt wird, um den Meßstrahl (68b) und den Referenzstrahl (70b) dieses zweiten Interferometers zu bilden, das der Messung der Position des Gegenstandes (0M) dient.

## Claims

1. Interferometer comprising in combination an integrated unit (52) and a measuring mirror (54) aligned along a first predetermined direction (55) relative to said integrated unit, a measuring region (56) being situated at least partially between said integrated unit and said measuring mirror, said integrated unit comprising a reference guide (64), partially defining a reference optical path length (80), and a measuring guide (62) partially defining a measuring optical path length (78) jointly with said measuring mirror, a reference luminous beam (70) and a measuring luminous beam (68) being respectively capable of propagating into said reference guide and said measuring guide, said integrated unit comprising a phase demodulator (66), to the input (65) of which lead said measuring guide and said reference guide, said interferometer comprising first and second lenses (72, 74) situated on said measuring optical path length, said first lens being used to collimate the measuring beam (68) coming from said integrated unit (52) and said second lens being used to focus said incoming measuring beam in said integrated unit after having been reflected by said measuring mirror (54), said interferometer being characterized in that it comprises means (82) for equalising the reference optical path and the measuring optical path respectively defined by the reference optical path length and the measuring optical path length in said integrated unit and in said first and second lenses.

2. Interferometer according to claim 1, characterized in that said equalising means are formed by a third lens (82) at the end of which is arranged a reference mirror (86).

3. Interferometer according to claim 2, characterized in that said first, second and third lenses (72, 74, 82) are identical.

4. Interferometer according to any of the preceding claims, used to stabilise a wavelength of a working luminous beam (102) in a medium filling said measuring region (56), such working luminous beam (102) being emitted by a light source (105) associated with said interferometer, the latter being characterized in that it is also associated with stabilising means (122, 124, 128, 132) which, as a function of a variation in the refraction index of said medium filling said measuring region (56), adjust the transmission frequency of said light source (105).

5. Interferometer according to claim 4, characterized in that said light source (105) is a laser diode and in that said stabilising means (122, 124, 128, 132) comprise means (124) for adjusting the supply current and the temperature of the laser diode so as to maintain the value of said wavelength constant over time.

6. Interferometer according to any of claims 1 to 3, used to measure the position of a mobile object (OM) relative to said integrated unit (114) and along said first predetermined direction (108), such interferometer being characterized in that said object is attached to said measuring mirror (54b) and in that it also comprises means (138, 142) for interpreting the result of the interference effected in said phase demodulator (66b), so as to provide a metrical value corresponding to such result and representing the position of said object.

7. Measuring device comprising in combination a first interferometer (100) according to claim 4 or 5 and a second interferometer (104) according to claim 6, such device being characterized in that said first and second interferometers are both optically supplied by said light source (105), said working luminous beam (102) being provided to said second interferometer (104) to form said measuring beam (68b) and said reference beam (70b) of said second interferometer being used to measure the position of said object (OM).
